# EUROPEAN PATENT APPLICATION

(11) **EP 3 904 813 A1**
(43) Date of publication of application: **03.11.2021**
(21) Application number: 19903565.0
(22) Date of filing: 24.12.2019
(51) Int. Cl.: F28D 15/02

(54) **LOOP-TYPE HEAT PIPE AND TRANSPORTER**

(30) Priority: 27.12.2018 JP 2018245271
(71) Applicant: Kawasaki Jukogyo Kabushiki Kaisha, Hyogo 650-8670 (JP)
(72) Inventor: HARUKI, Yu, Hyogo, 650-8670 (JP); SAKAGAWA, Keiji, Hyogo, 650-8670 (JP); HAKAMADA, Kazuhide, Hyogo, 650-8670 (JP); MITANI, Ryosuke, Hyogo, 650-8670 (JP)
(74) Representative: Dehns
(86) International application number: PCT/JP2019/050596
(87) International publication number: WO 2020/138078

(57) **Abstract**

A loop heat pipe incorporated into a transportation machine whose allowable tilt angle is α° includes: an evaporator that changes at least a part of a working fluid from a liquid phase into a gas phase by heat absorbed from a heat source; a condenser that changes the working fluid from the gas phase into the liquid phase; a vapor conduit connecting an outlet of the evaporator and an inlet of the condenser; and a liquid conduit connecting an outlet of the condenser and an inlet of the evaporator. When the transportation machine is placed on a horizontal surface, the condenser is located above the evaporator, a conduit center of one portion of the liquid conduit and a conduit center of another portion of the liquid conduit are spaced apart in a horizontal direction, the one portion being connected to the evaporator, the other portion being connected to the condenser, a conduit centerline of the liquid conduit extends downward from the condenser to the evaporator, and a tangent line to the conduit centerline at an arbitrary point on the conduit centerline forms an angle of α° to 90° with a horizontal plane.

## Description

### Technical Field

The present invention relates to a loop heat pipe and a transportation machine including the loop heat pipe.

### Background Art

A loop heat pipe technology has been traditionally known which uses phase changes of a working fluid to achieve high-density heat transport. A heat transport system employing such a loop heat pipe has been used, for example, to cool an electronic device such as a computer or home electric appliance. In some loop heat pipes, the working fluid is circulated by means of capillary force and/or gravity.

A loop heat pipe includes a closed loop formed by an evaporator, a condenser, a vapor conduit leading from the evaporator to the condenser, and a liquid conduit leading from the condenser to the evaporator. The closed loop is charged with a working fluid. In the evaporator, the working fluid in a liquid phase is heated by heat transferred from a heat-generating element, and a part of the working fluid changes into a gas phase. The gas-liquid two-phase working fluid moves in the vapor conduit under the action of pressure difference and buoyancy and reaches the condenser. In the condenser, the working fluid is cooled into the liquid phase. The liquid-phase working fluid returns to the evaporator under the action of capillary force and/or gravity. In this manner, the loop heat pipe allows the working fluid to circulate in the two-phase closed loop and transport heat from the evaporator to the condenser, thereby cooling the heat-generating element thermally connected to the evaporator.

Patent Literature 1 discloses an electronic device cooling system employing a loop heat pipe as described above. The electronic device cooling system includes an evaporator, a condenser located above the evaporator, a gas flow path leading from the evaporator to the condenser, and a liquid flow path leading from the condenser to the evaporator. Each of the gas and liquid flow paths is formed by a flexible tube, and at least one of the gas and liquid flow paths extends downward from the condenser to the evaporator.

### Citation List

### Patent Literature

PTL 1: Japanese Patent No. 5857964

### Summary of Invention

### Technical Problem

Electronic devices have become more and more sophisticated and miniaturized, and this has recently led to a growing demand for thermal management in transportation machines such as watercrafts, railcars, automobiles, and aircrafts which are equipped with a large number of the sophisticated, miniaturized devices. Some transportation machines incorporate a heat transport system including a loop heat pipe as described above which uses gravity for circulation of a working fluid, and such a transportation machine, the position of the body of which constantly changes, suffers a position change-induced decrease in the drive force for allowing the working fluid to circulate and a corresponding decrease in the heat transport rate.

In Patent Literature 1, the liquid flow path leading from the condenser to the evaporator is formed by a flexible tube extending downward from the condenser to the evaporator, and this can prevent disruption of the flow of the working fluid returning from the condenser to the evaporator. In Patent Literature 1, however, changes in the position of the loop heat pipe itself are not taken into account, and a change in the position of the loop heat pipe could lead to the liquid flow path having a region where the movement direction of the working fluid is opposite to the direction of gravity.

Transportation machines change their positions in various ways. For example, an aircraft tilts in the travel direction or left-right direction of the aircraft during ascent, descent, or normal operation. Thus, many design restrictions are imposed when a liquid flow path through which the working fluid can flow without movement in a direction opposite to that of gravity is arranged taking into consideration the various kinds of position changes.

The present invention has been made in view of the above circumstances, and an object of the present invention is to provide a loop heat pipe and a transportation machine including the loop heat pipe, the loop heat pipe and transportation machine being adapted to prevent disruption of the flow of a working fluid in the event that the loop heat pipe is tilted.

### Solution to Problem

A loop heat pipe according to an aspect of the present invention is incorporated into a transportation machine whose allowable tilt angle is α°, and includes: an evaporator that changes at least a part of a working fluid from a liquid phase into a gas phase by heat absorbed from a heat source; a condenser that changes the working fluid from the gas phase into the liquid phase; a vapor conduit that connects an outlet of the evaporator and an inlet of the condenser and through which the working fluid flows from the evaporator into the condenser; and a liquid conduit that connects an outlet of the condenser and an inlet of the evaporator and through which the working fluid flows from the condenser into the evaporator. When the transportation machine is placed on a horizontal surface, the condenser is located above the evaporator, a conduit center of one portion of the liquid conduit and a conduit center of another portion of the liquid conduit are spaced apart in a horizontal direction, the one portion being connected to the evaporator, the other portion being connected to the condenser, a conduit centerline of the liquid conduit extends downward from the condenser to the evaporator, and a tangent line to the conduit centerline at an arbitrary point on the conduit centerline forms an angle of α° to 90° with a horizontal plane.

A transportation machine according to another aspect of the present invention includes a heat-generating element and the loop heat pipe as defined above, and the evaporator of the loop heat pipe uses the heat-generating element as a heat source to change at least a part of the working fluid from the liquid phase into the gas phase.

With the loop heat pipe configured as described and the transportation machine incorporating the loop heat pipe, in the event that the loop heat pipe is tilted by an angle equal to or smaller than the allowable tilt angle of the transportation machine, the tangent line to the conduit centerline of the liquid conduit at an arbitrary point on the conduit centerline extends obliquely downward or horizontally, and the liquid conduit has no region where the movement direction of the working fluid is opposite to the direction of gravity. As such, the loop heat pipe can avoid disruption of the flow of the working fluid returning from the condenser to the evaporator and maintain the circulation of the working fluid.

### Advantageous Effects of Invention

The present invention can provide a loop heat pipe and a transportation machine including the loop heat pipe, the loop heat pipe and transportation machine being adapted to prevent disruption of the flow of a working fluid in the event that the loop heat pipe is tilted.

### Brief Description of Drawings

FIG. 1 illustrates a schematic configuration of a loop heat pipe according to an exemplary embodiment of the present invention.
FIG. 2 illustrates an aircraft incorporating the loop heat pipe of FIG. 1.
FIG. 3 illustrates the loop heat pipe of FIG. 1 tilted by α° from a reference position.
FIG. 4 illustrates a schematic configuration of a loop heat pipe according to a first variant.
FIG. 5 illustrates a schematic configuration of a loop heat pipe according to a second variant.
FIG. 6 illustrates the loop heat pipe as viewed in the direction of the arrow VI of FIG. 5.

### Description of Embodiments

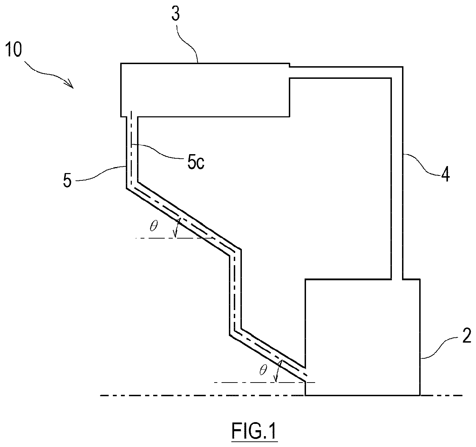

Hereinafter, an exemplary embodiment of the present invention will be described with reference to the drawings. FIG. 1 illustrates a schematic configuration of a loop heat pipe 10 according to the exemplary embodiment of the present invention. The loop heat pipe 10 is suitable for incorporation into a transportation machine whose allowable tilt angle is α° and which is tiltable from the horizontal to the allowable tilt angle. Examples of the transportation machine include watercrafts (including submersibles), railcars, automobiles, and aircrafts.

The loop heat pipe 10 of FIG. 1 includes an evaporator 2 that changes at least a part of a working fluid from a liquid phase into a gas phase, a condenser 3 that changes the working fluid from the gas phase into the liquid phase, a vapor conduit 4 that connects the outlet of the evaporator 2 and the inlet of the condenser 3 and through which the working fluid flows from the evaporator 2 into the condenser 3, and a liquid conduit 5 that connects the outlet of the condenser 3 and the inlet of the evaporator 2 and through which the working fluid flows from the condenser 3 into the evaporator 2. The evaporator 2, vapor conduit 4, condenser 3, and liquid conduit 5 are connected in a loop to form an annular flow path. The annular flow path is charged with the working fluid which is a compressible fluid. The working fluid is not limited to particular fluids, and may be a condensable fluid commonly used as a working fluid in heat pipes. Examples of the condensable fluid include water, an alcohol, ammonia, a fluorocarbon, a hydrofluorocarbon, a hydrofluoroether, and a liquid mixture of these fluids.

The evaporator 2 is thermally connected to a heat source (not shown), for example, via thermal grease or a heat transfer sheet. In this evaporator 2, the working fluid absorbs heat from the heat source, and a part of the working fluid boils and changes into the gas phase. The two-phase working fluid consisting of the vapor phase resulting from the boiling in the evaporator 2 and the liquid phase moves in the vapor conduit 4 under the action of pressure difference and buoyancy and reaches the condenser 3. The condenser 3 is provided with a cooling path (not shown), and the two-phase working fluid releases heat and is cooled into the liquid phase during passage through the cooling path. The liquid-phase working fluid descends in the liquid conduit 5 under the action of gravity and returns to the evaporator 2.

In the loop heat pipe 10 assuming a reference position, the condenser 3 is located above the evaporator 2. Additionally, in the loop heat pipe 10 assuming the reference position, the conduit center of one portion of the liquid conduit 5 and the conduit center of another portion of the liquid conduit 5 are spaced apart in the horizontal direction, the one portion being connected to the evaporator 2, the other portion being connected to the condenser 3. The "reference position" of the loop heat pipe 10 is defined as a position assumed by the loop heat pipe 10 when the transportation machine incorporating the loop heat pipe 10 is placed on a horizontal surface.

In the loop heat pipe 10 assuming the reference position, a conduit centerline 5c of the liquid conduit 5 extends downward from the condenser 3 to the evaporator 2. Further, the tangent line to the conduit centerline 5c of the liquid conduit 5 at an arbitrary point on the conduit centerline 5c (i.e., at any point on the conduit centerline 5c) forms an angle θ of α° to 90° with a horizontal plane. The angle α is a limit of the range of tilting movement of a moving entity incorporating the loop heat pipe 10, and corresponds to the allowable tilt angle up to which the transportation machine can tilt during normal operation. The "normal operation" of the transportation machine refers, for example, to operation performed taking into consideration economic efficiency and safety. The angle α is not limited to the allowable tilt angle, and may be any one of a maximum value, a recommended value, and an average value of the angle of tilt of the transportation machine with respect to the horizontal. The conduit centerline 5c is a curve extending from the evaporator 2 to the condenser 3 through the center points of flow path cross-sections of the liquid conduit 5.

Examples of the transportation machine incorporating the loop heat pipe 10 configured as described above include watercrafts (including submersibles), railcars, automobiles, and aircrafts. The following describes an example where the loop heat pipe 10 is incorporated in an aircraft 50 which is an example of the transportation machine.

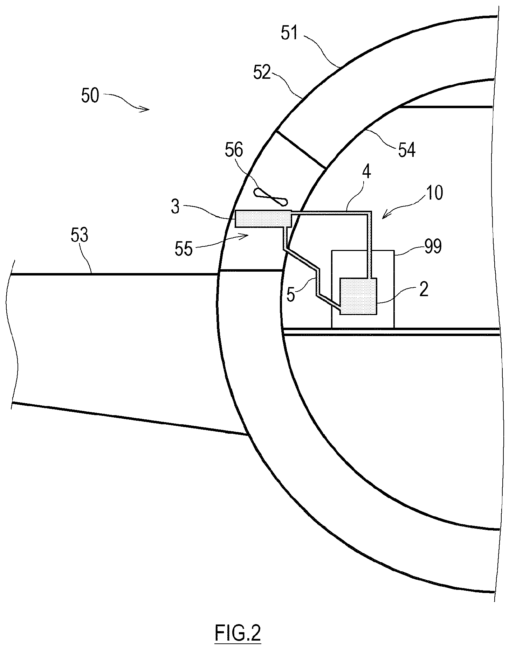

FIG. 2 partially shows a fuselage 51 and main wing 53 of the aircraft 50. The fuselage 51 has a multilayer structure including an outer panel 52 and an inner wall 54 located closer to the cabin than the outer panel 52. Between the outer panel 52 and inner wall 54 is defined a cooling chamber 55. The temperature inside the cooling chamber 55 is low because of cold energy transferred from the outer panel 52 which during flight is exposed to outside air having a considerably lower temperature than that near the ground. Alternatively, the outer panel 52 may be provided with an air inlet and air outlet communicating with the cooling chamber 55, and ram air may be introduced into the cooling chamber 55 during flight.

The aircraft 50 incorporates a heat-generating element 99 and the loop heat pipe 10 which uses the heat-generating element 99 as a heat source for the evaporator 2. Examples of the heat-generating element 99 include, but are not limited to: an electronic device including heat-generating parts, such as a control board, an engine control unit (ECU), or a computer; a friction heat-generating mechanical part such as a bearing; and a battery. Air inside the cabin may be used as the heat source instead of the heat-generating element 99.

The evaporator 2 is thermally connected to the heat-generating element 99, and the condenser 3 is located in the cooling chamber 55. In the cooling chamber 55 is disposed a fan 56 for forcing a gas flow to pass the condenser 3. The condenser 3 condenses the working fluid using cold energy from the outside air. During flight of the aircraft 50, the temperature of the outside air is considerably lower than normal temperatures, and thus a large temperature difference is created between the heat source to which the evaporator 2 is thermally connected and the medium (the gas in the cooling chamber 55) to which the condenser 3 releases heat. In consequence, highly efficient heat transport is achieved by the loop heat pipe 10.

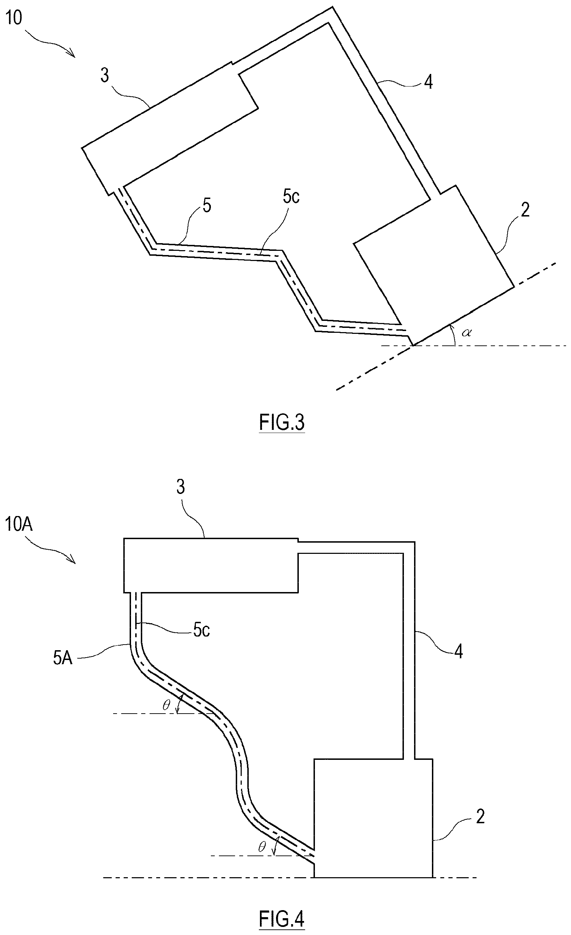

The aircraft 50 changes its position when turning, ascending, or descending during flight. Once the aircraft 50 makes a tilting movement accompanying a position change, the loop heat pipe 10 is also tilted from the reference position. FIG. 3 illustrates the loop heat pipe 10 of FIG. 1 tilted by α° from the reference position. In the loop heat pipe 10 tilted by α° from the reference position, as shown in FIG. 3, the tangent line to the conduit centerline 5c of the liquid conduit 5 at an arbitrary point on the conduit centerline 5c extends obliquely downward or horizontally. Thus, the liquid conduit 5 has no region where the movement direction of the working fluid is opposite to the direction of gravity. As such, in the event that the loop heat pipe 10 is tilted by an angle of α° or less with respect to a horizontal plane in response to a tilting movement of the aircraft 50, the flow of the working fluid returning from the condenser 3 to the evaporator 2 is not disrupted, and the circulation of the working fluid can be maintained.

In general, for an aircraft, the maximum value of the ascent angle during takeoff and the maximum value of the swing angle during turning are determined depending on factors such as the size and weight of the aircraft body and the course of flight. The larger of the maximum values of the ascent and swing angles may be employed as the angle α described above. In this case, when the loop heat pipe 10 incorporated in the aircraft employing the larger of the maximum values of the ascent and swing angles as the angle α is in the reference position, the angle θ (the smaller of the angles) between the tangent line to the conduit centerline 5c of the liquid conduit 5 at an arbitrary point on the conduit centerline 5c and a horizontal plane is from α° to 90°. With the angle α thus defined, in the event that the aircraft 50 changes its position during ascent or turning, the loop heat pipe 10 incorporated in the aircraft 50 can avoid disruption of the flow of the working fluid returning from the condenser 3 to the evaporator 2 and maintain the circulation of the working fluid.

The range of tilting movement during normal operation varies for different transportation machines. For the aircraft 50, the allowable limit of the pitch angle may be about 15°, and the allowable limit of the roll angle (bank angle) may be about 30°. For railcars, the allowable tilt angle with respect to a horizontal plane may be from about 2 to 5°. For watercrafts other than submersibles, the allowable limit of the pitch angle may be about 25°, and the allowable limit of the roll angle may be about 25°. For roads on which automobiles travel, the maximum tilt angle is about 20° (about 40%). Since, as described above, the range of tilting movement varies for different transportation machines, a suitable value of the angle α may be chosen depending on the type of the transportation machine. Given that the allowable tilt angle during normal operation is 30° or less for most transportation machines, the value of the angle α may be set to 30 irrespective of the range of tilting movement of the transportation machine.

### First Variant

FIG. 4 illustrates a schematic configuration of a loop heat pipe 10A according to a first variant. As shown in FIG. 4, the loop heat pipe 10A according to the first variant has substantially the same structure as the loop heat pipe 10 according to the above embodiment, and is characterized by including a liquid conduit 5A formed by a tube having flexibility.

When the loop heat pipe 10A according to the first variant is in the reference position, the condenser 3 is located above the evaporator 2, and the conduit center of the portion of the liquid conduit 5A that is connected to the evaporator 2 and the conduit center of the portion of the liquid conduit 5A that is connected to the condenser 3 are spaced apart in the horizontal direction. The conduit centerline 5c of the liquid conduit 5A extends downward from the condenser 3 to the evaporator 2, and the tangent line to the conduit centerline 5c of the liquid conduit 5A at an arbitrary point on the conduit centerline 5c forms an angle θ of α° to 90° with a horizontal plane. To adjust the angle θ between the tangent line to the conduit centerline 5c and a horizontal plane, the liquid conduit 5A may be formed by a combination of a flexible tube and a rigid tube.

### Second Variant

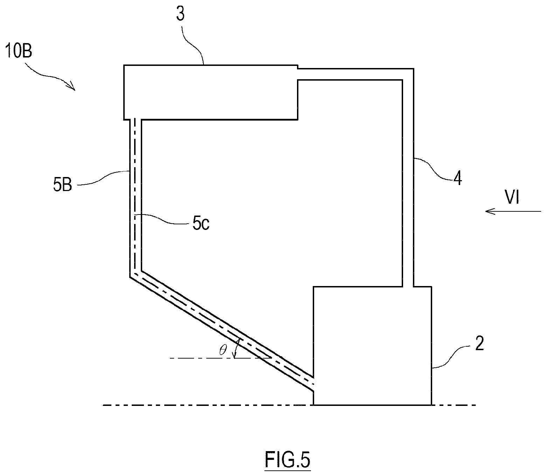

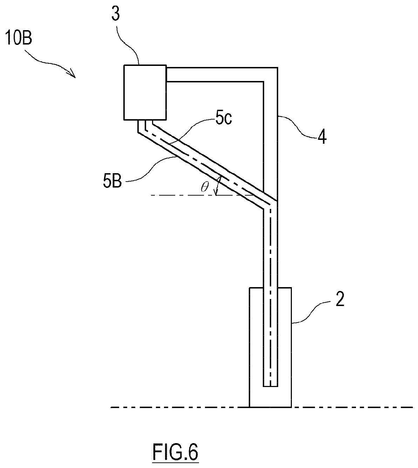

FIG. 5 illustrates a schematic configuration of a loop heat pipe 10B according to a second variant, and FIG. 6 illustrates the loop heat pipe 10B as viewed in the direction of the arrow VI of FIG. 5. As shown in FIGS. 5 and 6, the loop heat pipe 10B according to the second variant includes a liquid conduit 5B extending in three-dimensions; that is, at least a part of the liquid conduit 5B extends in a direction perpendicular to the plane of FIG. 5.

When the loop heat pipe 10B according to the second variant is in the reference position, the condenser 3 is located above the evaporator 2, and the conduit center of the portion of the liquid conduit 5B that is connected to the evaporator 2 and the conduit center of the portion of the liquid conduit 5B that is connected to the condenser 3 are spaced apart in the horizontal direction. Additionally, as shown in FIGS. 5 and 6, the tangent line to the conduit centerline 5c of the liquid conduit 5B at an arbitrary point on the conduit centerline 5c forms an angle θ of α° to 90° with a horizontal plane both when the loop heat pipe 10B is viewed in a first horizontal direction and when the loop heat pipe 10B is viewed in a second horizontal direction orthogonal to the first horizontal direction.

Also in the above case where the liquid conduit 5B of the loop heat pipe 10B includes a three-dimensional path, tilting movements of the loop heat pipe 10B in various directions can be accommodated since the angle θ between the tangent line to the conduit centerline 5c of the liquid conduit 5B at an arbitrary point on the conduit centerline 5c and a horizontal plane is from α° to 90°. For example, in the event that the transportation machine incorporating the loop heat pipe 10B is tilted by an angle of α° or less in both the travel direction and the lateral direction, the tangent line to the conduit centerline B of the liquid conduit 5B at an arbitrary point on the conduit centerline 5c extends obliquely downward or horizontally, and thus the flow of the working fluid returning from the condenser 3 to the evaporator 2 is not disrupted.

As described above, the loop heat pipe 10 according to the exemplary embodiment is incorporated into a transportation machine whose allowable tilt angle is α°, and includes: an evaporator 2 that changes at least a part of a working fluid from a liquid phase into a gas phase by heat absorbed from a heat source; a condenser 3 that changes the working fluid from the gas phase into the liquid phase; a vapor conduit that connects an outlet of the evaporator 2 and an inlet of the condenser 3 and through which the working fluid flows from the evaporator 2 into the condenser 3; and a liquid conduit that connects an outlet of the condenser 3 and an inlet of the evaporator 2 and through which the working fluid flows from the condenser 3 into the evaporator2. When the transportation machine is placed on a horizontal surface, the condenser 3 is located above the evaporator 2, a conduit center of one portion of the liquid conduit 5 and a conduit center of another portion of the liquid conduit 5 are spaced apart in a horizontal direction, the one portion being connected to the evaporator 2, the other portion being connected to the condenser 3, a conduit centerline 5c of the liquid conduit 5 extends downward from the condenser 3 to the evaporator 2, and a tangent line to the conduit centerline 5c at an arbitrary point on the conduit centerline 5c forms an angle θ of α° to 90° with a horizontal plane.

The transportation machine according to the exemplary embodiment includes a heat-generating element 99 and the loop heat pipe 10, and the evaporator 2 of the loop heat pipe 10 uses the heat-generating element 99 as a heat source to change at least a part of the working fluid from the liquid phase into the gas phase.

With the loop heat pipe 10 configured as described and the transportation machine (aircraft 50) incorporating the loop heat pipe 10, in the event that the loop heat pipe 10 is tilted by an angle equal to or smaller than the allowable tilt angle of the transportation machine, the tangent line to the conduit centerline 5c of the liquid conduit 5 at an arbitrary point on the conduit centerline 5c extends obliquely downward or horizontally, and the liquid conduit 5 has no region where the movement direction of the working fluid is opposite to the direction of gravity. As such, the loop heat pipe 10 and the transportation machine incorporating the loop heat pipe 10 can avoid disruption of the flow of the working fluid returning from the condenser 3 to the evaporator 2 and maintain the circulation of the working fluid.

In the loop heat pipe 10, as illustrated in the exemplary embodiment, the angle α° may be any one of a maximum value, a recommended value, and an average value of the angle of tilt of the transportation machine with respect to the horizontal.

When, as in this case, an expected angle of tilt of the transportation machine is employed as the angle α°, the circulation of the working fluid can be appropriately maintained without disruption of the flow of the working fluid returning from the condenser 3 to the evaporator 2.

In the loop heat pipe 10, as illustrated in the exemplary embodiment, the angle α° may be 30°.

When, as in this case, a typical angle of tilt of the transportation machine during normal operation is employed as the angle α°, the circulation of the working fluid can be appropriately maintained while the design flexibility is ensured.

Although the foregoing has described a preferred embodiment of the present invention, the scope of the present invention embraces modifications made to the details of the structure and/or function of the above embodiment without departing from the concept of the present invention.

For example, the loop heat pipe 10 of the above embodiment is not limited to the thermosyphon type, and may be of the wick type. The loop heat pipe of the wick type uses not only the capillary force acting on the working fluid in the wick but also gravity to return the working fluid from the condenser 3 to the evaporator 2. Thus, the present invention can offer the benefits as described above also when applied to a heat transport system including a loop heat pipe of the wick type.

### Reference Signs List

2: evaporator
3: condenser
4: vapor conduit
5, 5A, 5B: liquid conduit
5c: conduit centerline
10, 10A, 10B: loop heat pipe
50: aircraft (example of transportation machine)
51: fuselage
52: outer panel
53: main wing
54: inner wall
55: cooling chamber
56: fan
99: heat-generating element

## Claims

1. A loop heat pipe incorporated into a transportation machine whose allowable tilt angle is α°, comprising:
an evaporator that changes at least a part of a working fluid from a liquid phase into a gas phase by heat absorbed from a heat source;
a condenser that changes the working fluid from the gas phase into the liquid phase;
a vapor conduit that connects an outlet of the evaporator and an inlet of the condenser and through which the working fluid flows from the evaporator into the condenser; and
a liquid conduit that connects an outlet of the condenser and an inlet of the evaporator and through which the working fluid flows from the condenser into the evaporator, wherein
when the transportation machine is placed on a horizontal surface,
the condenser is located above the evaporator,
a conduit center of one portion of the liquid conduit and a conduit center of another portion of the liquid conduit are spaced apart in a horizontal direction, the one portion being connected to the evaporator, the other portion being connected to the condenser,
a conduit centerline of the liquid conduit extends downward from the condenser to the evaporator, and
a tangent line to the conduit centerline at an arbitrary point on the conduit centerline forms an angle of α° to 90° with a horizontal plane.

2. The loop heat pipe according to claim 1, wherein the angle α° is any one of a maximum value, a recommended value, and an average value of the angle of tilt of the transportation machine with respect to the horizontal.

3. The loop heat pipe according to claim 1, wherein the angle α° is 30°.

4. A transportation machine comprising:
a heat-generating element; and
the loop heat pipe according to any one of claims 1 to 3, wherein
the evaporator of the loop heat pipe uses the heat-generating element as a heat source to change at least a part of the working fluid form the liquid phase into the gas phase.
